# EUROPEAN PATENT APPLICATION

(11) **EP 2 700 302 A1**
(43) Date of publication of application: **26.02.2014**
(21) Application number: 13180995.6
(22) Date of filing: 20.08.2013
(51) Int. Cl.: A01K 1/00, E04H 5/08

(54) **Portable building structure**

(30) Priority: 20.08.2012 GB 201214828
(71) Applicant: Finrone Systems Limited, Londonderry BT47 2SX (GB)
(72) Inventor: Forbes, Gordon, Strabane, Tyrone BT82 9PX (GB)
(74) Representative: Wallace, Alan Hutchinson

(57) **Abstract**

A portable building structure (10) comprising first and second building segments (12a, 12b), each segment comprising a base structure (18), a wall structure (20, 22) and a roof structure (16) and being configured to define a row of animal pens (34). The base structure provides a tank (42) beneath each pen. The first and second building segments comprise individually portable units. To install the structure the first and second building segments are constructed off site and individually transported on site. The building segments are then located side-by-side but spaced apart and a mid-segment (14) is constructed to join the building segments together.

## Description

### Field of the Invention

The present invention relates to portable building structures, especially for use in housing animals.

### Background to the Invention

Portable building structures for use in animal housing are known. However, because they need to be transportable they tend to be relatively small and lightweight. Moreover, they tend not to be sufficiently robust to be able to support concrete flooring, which is desirable in some applications.

It would be desirable therefore to provide an improved portable building structure.

### Summary of the Invention

A first aspect of the invention provides a portable building structure comprising first and second building segments, each segment comprising a base structure, a wall structure and a roof structure, wherein the first and second building segments comprise individually portable units.

In preferred embodiments, the first and second segments are mutually spaced apart, and preferably substantially parallely disposed with respect to one another. Advantageously, the first and second segments are joined together by a mid-segment, the mid-segment preferably being configured to provide a passageway between the first and second building segments, which passageway typically extends substantially parallel with the first and second building segments.

Preferably, each building segment has an internal side, the respective roof structure overhanging the respective internal side. The preferred arrangement is such that the overhanging portions of each roof structure provide a roof for the mid-segment.

In preferred embodiments, each building segment is configured to define at least one but typically a plurality of animal pens. The pens may be arranged in a row. Each pen may be openable, e.g. by means of a gate, onto the passageway defined by the mid-segment. The base structure is advantageously shaped to define at least one tank below the floor of the or each pen.

A second aspect of the invention provides a portable building segment comprising a base structure, a wall structure and preferably at least part of a roof structure.

A third aspect of the invention provides a base structure for a portable building structure, the base structure being shaped to define at least one tank, and comprising a bottom, a peripheral wall and means for supporting a floor above the bottom. In preferred embodiments, at least one floor support extending between opposing portions of said wall to define at least two tanks. Preferably a respective tank is provided for each pen. The base structure may comprise a peripheral frame; at least one bottom support extending between opposing portions of said frame; and flooring supported by said bottom supports to provide the bottom of the base structure. Typically a covering is provided over at least the sides of said at least one floor support, and optionally over the internal faces of said peripheral frame. Preferably, said flooring and covering are provided with a substantially liquid-tight lining, e.g. of plastics or fibreglass. The lining advantageously provides the internal surfaces of the or each tank defined by the base structure. The floor supported by the floor support(s) advantageously may comprise concrete slabs.

A fourth aspect of the invention provides a method of building a portable building structure, the method comprising at least partly constructing first and second building segments off site; individually transporting said building segments on site; locating said building segments side-by-side but spaced apart; and constructing a mid-segment to join said building segments to make a portable building structure.

Further advantageous aspects of the invention will be apparent to those ordinarily skilled in the art upon review of the following description of a specific embodiment and with reference to the accompanying drawings.

### Brief Description of the Drawings

An embodiment of the invention is now described by way of example and with reference to the accompanying drawings in which:
Figure 1 is a sectioned end view of a portable building structure embodying one aspect of the invention;
Figure 2 is a detail of part of the structure of Figure 1;
Figure 3 is a further detail of part of the structure of Figure 1;
Figure 4 is a sectioned side view of part of the structure of Figure 1;
Figure 5 is a sectioned side view of the structure of Figure 1;

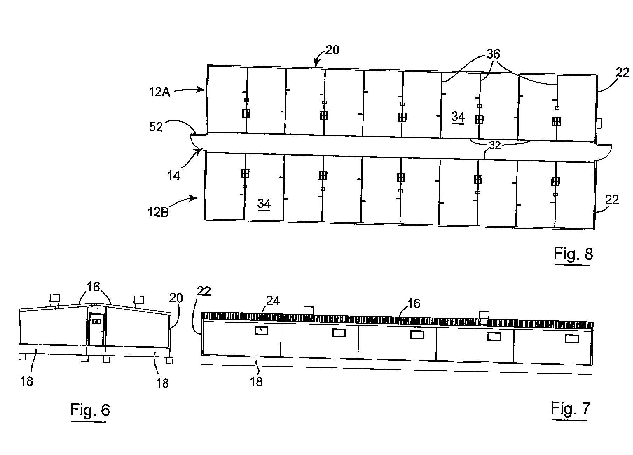

Figure 6 is an end elevation of the structure of Figure 1;
Figure 7 is a side elevation of the structure of Figure 1;
Figure 8 is a plan view of the structure of Figure 1 with its roof removed;
Figure 9 is a perspective view of base structure shown in a state of partial completion;
Figure 10 is a perspective view of part of the base structure of Figure 9;
Figure 11 is a perspective view of a completed base structure.

### Detailed Description of the Drawings

Referring now to the drawings there is shown generally indicated as 10 a portable building structure embodying one aspect of the invention.

The preferred building structure 10 comprises first and second building segments 12a, 12b separated by a mid-segment 14. Each building segment 12a, 12b comprises a respective roof structure 16, base structure 18, and a wall structure which in this embodiment includes a side structure 20 and end structures 22. The first and second building segments 12a, 12b may be the same as or substantially the same as one another. For example, they may be substantially identical, or may be mirror images of one another.

For each building segment 12a, 12b, the respective side structure 20 serves in use as an exterior wall of a building structure 10. To that end, the side structure 20 may comprise one or more panels or other walls. Preferably the side structure 20 extends fully between the end structures 22 and between the base structure 18 and roof structure 16, although one or more windows 24, vents or other apertures may be provided. Similarly, each end structure 22 typically comprises a panel or other walled structure that typically extends between the base structure 18 and the roof structure 16 to enclose the building segment 12a, 12b at its ends. One or more windows or other openings may be provided as desired.

The respective opposite side 26 of each building segment 12a, 12b is located internally of the building structure 10 during use. A plurality of spaced apart supports 28, for example posts, are spaced apart along the side 26 extending, preferably substantially vertically in use, between the base structure 18 and a roof support structure 30, which in the preferred embodiment comprises a rail that extends along the side 26 from end to end of the respective building segment 12a, 12b.

In the preferred embodiment, a respective barrier 32 extends between adjacent posts 28 along the side 26. Each barrier 32 typically comprises a gate, and typically extends from the base of structure 18 partway to the roof structure 16.

In each building segment 12a, 12b the respective ends 22, side-structure 20 and barriers 32 define a respective housing compartment. Typically, the housing compartment is divided into a plurality of pens 34. This may be achieved by providing one or more dividers 36 extending between the sides 22, 26. Each divider 36 may take any convenient form e.g. one or more panels or other barriers. The dividers 36 preferably extend substantially perpendicularly between the sides 22, 26 and, where more than one is provided, are preferably substantially parallel with one another. In typical embodiments, a plurality of dividers 36 are provided to define a plurality of pens 34 in each building segment 12a, 12b. Each pen 34 may be dimensioned to receive one or more animal during use. In typical embodiments the dividers 36 extend from the base 18 partway to the roof structure 16. Conveniently, each barrier 32 extends between the side-structure 22 and a respective post 28, and may be fixed, typically removably fixed, to the post in any convenient manner.

For each building segment 12a, 12b, the respective roof structure is supported by the respective side-structure 20 and the support posts 28, via the support structure 30 when present. The roof structure 16 is shaped and dimensioned to overhang the respective side 26. As is described in more detail hereinafter, the distance by which the roof structure 16 overhangs the respective side 26 is preferably substantially equal to half of the desired width of the mid-segment 14.

The base structure 18 provides support for a floor 38 and conveniently for the side structures 20, end structures 22 and support posts 28. Conveniently, the base structure 18 may comprise one or more peripheral laterally extending lips 40 for supporting the side-structure 20 and/or end structures 22.

The base structure 18 is also configured to define at least one tank 42 beneath the floor 38. To this end, the base structure 18 may comprise a container 44 defined by a bottom 46 and side and end walls 48. The base structure 18 is configured to support the floor 38 spaced apart from (and in use above) the bottom 46 so that one or more tanks 42 are defined beneath the floor 38.

In use, the respective building segments 12a, 12b are positioned such that their respective sides 26 face one another and are spaced apart from one another. Typically the respective sides 26 run parallel to one another in this configuration. The mid-segment 14 is defined by the region between the facing building segments 12a, 12b. In particular the width of the mid-section 14 is determined by the spacing between the building segments 12a, 12b. Moreover, the space in between the building segments 12a, 12b is such that the respective overhanging ends of the respective roof structures 16 meet or substantially meet. A cap 50 or other joint, which is typically strip-like, may be provided along the interface between the roof structures 16 to provide a seal along the interface and optionally to create a coupling between the roof structures. Other couplings or fixings (not shown) such as bolts, clips etc may be provided as required to couple the respective roof structures 16 together.

A door 52 may be provided at one or both ends of the mid-segment 14. Where a door is not provided it is preferred that the end of the mid-segment 14 is closed by a panel or other wall structure.

The mid-segment includes a floor 54. Conveniently the floor 54 is supported by the respective base structures 18 of the building segments 12a, 12b. For example, the floor 54 may be supported by a respective peripheral laterally projecting lip 40 extending wholly or partly along the side 26 of the respective base structures 18. The floor 54 may take any suitable form, e.g. one or more sheets or slabs of suitable material, e.g. plastics or wood, but preferably concrete. Preferably the arrangement is such that the floor 54 is at substantially the same level as the respective floors 38 of the building segments 12a, 12b. Hence, in use each building segment 12a, 12b provides a row of at least one but typically a plurality of pens 34, the rows being separated by a walkway provided by the floor 54 of the mid-segment 14.

The respective roof structures 16 may take any suitable form and may, for example, comprise a support frame 56 covered by one or more sheets of roofing material, which may be fixed to the support frame in any convenient manner. The support frame 56 may be supported by the posts 28/rail (as applicable) and side-structures 20 and may be fastenable thereto by any suitable fixing devices.

Advantageously, the preferred building structure 10 lends itself to being transported in parts and assembled and finished at a desired installation site. In particular, each building segment 12a, 12b may be wholly or partly constructed at a manufacturing facility (which conveniently may be covered) and then individually transported to the site. In particular, at least the base structure, side-structures, end-structures and optionally all or part of the roof structure (e.g. the support frame 56) may be assembled prior to transportation. Advantageously, the width of the segments 12a, 12b can be made compatible with transport regulations, e.g. concerning wide loads. For example, in the preferred embodiment, the width of the building segments is approximately 4 metres in length to comply with wide load transportation regulations. The building structure 10, when constructed on site, is more than twice this width (when the width of the mid-segment 14 is included) thereby allowing a sizeable portable building structure to be created on site.

When on site, the roof structure 16 may be added and/or completed (e.g. the roofing material may be added to the frame 56), and the mid-segment 14 is constructed e.g. addition of the door(s) 52, end wall(s) and floor 54. It is also convenient that the barriers 32 and/or dividers 36 can be added at this time, i.e. after the building segments 12a, 12b have been transported to site. The floor 38 of the segments 12a, 12b may be added prior to transportation or preferably after transportation, particularly in embodiments where the floor 38 comprises concrete slabs.

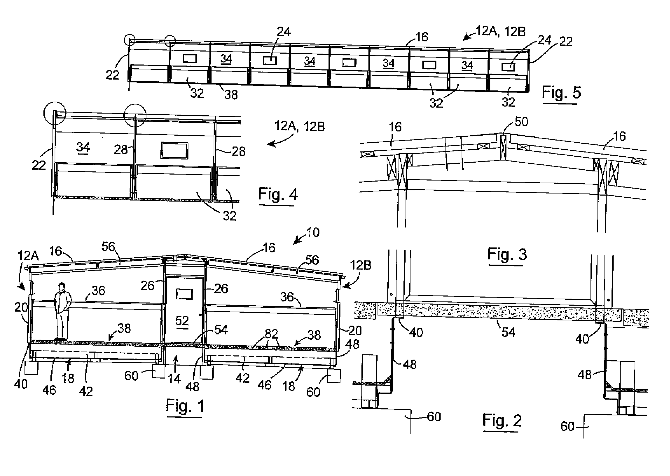

Typically the building structure 10 is laid on a foundation, which is represented in Figure 1 by foundation blocks 60.

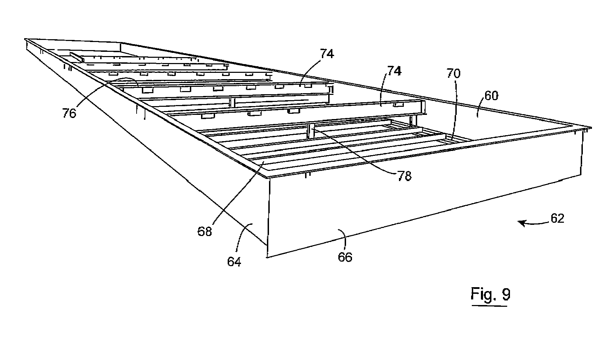

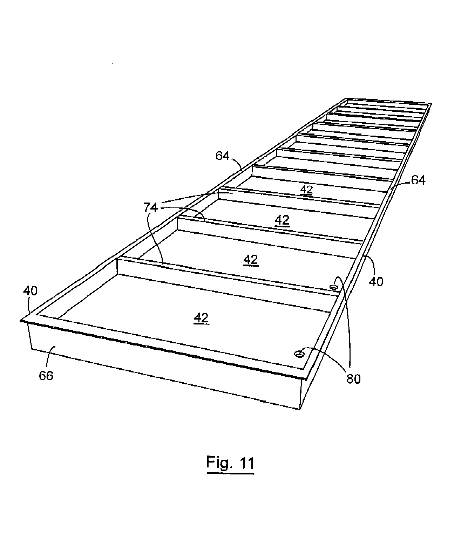

Referring now in particular to Figures 9 to 11, there is described a preferred embodiment of the base structure 18.

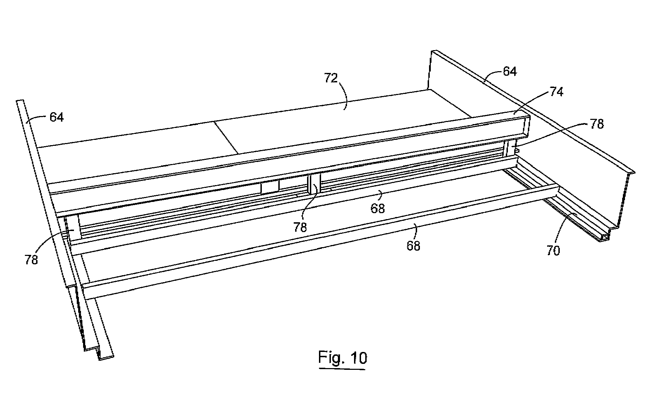

Base structure 18 comprises a frame 62 having sides 64 and ends 66, the frame 62 typically being substantially rectangular in shape. The structure 18 has a solid bottom 46 surrounded by side and end walls 48 that are provided respectively by the sides and ends 64, 66. Preferably, the bottom 46 comprises a plurality of spaced apart bottom supports 68. The bottom supports 68 extend across the frame 62 from side 64 to side 64 (as illustrated) or alternatively, or in addition, from end 66 to end 66. The side 64 and/or end 66 as applicable may be shaped to define a seat 70 for receiving an end of the support 68. As can best be seen from Figure 10, in the preferred embodiment the profile of the side 64 is shaped to define a step at its in use lower end, the step serving as the seat 70. The support 68 may be fixed to the side/ends 66 in any convenient manner e.g. by welding, bolts or other fixings. Conveniently the supports 68 may take the form of box section bars although may take the form of any other suitable support member. The support 68 and the sides/ends of the frame 62 are preferably made from metal, for example steel. The floor 72 may be formed from any suitable flooring material, for example, wood, plastics, metal or any other sheet material or planks. It is preferred to used an inexpensive and lightweight material, for example plywood. The floor 72 is laid across the supports 68 to provide a solid bottom 46 for the frame 62. The floor 72 may be fixed to the frame 62 e.g. to the side 64, end 66 and/or supports 68 in any convenient manner, e.g. screws, bolts or other fixings. The bottom 46 further comprises a floor 72 which is supported by the bottom support 68. Conveniently, the supports 68 run substantially parallely across the frame 62.

The frame 62 further comprises at least one but typically a plurality of floor supports 74 extending between the sides 64. The floor support 74, or at least their respective upper surfaces 76 are located above the bottom 46 of the frame 62. The floor supports 74 conveniently comprise one or more beams or other elongate support members. In the illustrated embodiment, each floor support 72 comprises a single beam, for example an I-section beam such as a girder and is preferably formed from metal, e.g. steel. Preferably the supports 74 extend substantially perpendicularly between the sides 64. The supports 74 may be fixed to the sides 64 in any convenient manner, e.g. bolts and/or other fixings. In the preferred embodiment where there is more than one support 74, the supports 74 are preferably disposed substantially parallely with one another.

In the preferred embodiment, each support 74 is positioned to be coincident with a respective divider 36. Most preferably, a respective support 74 is provided for each divider 36. Advantageously, one or more support posts 78 are provided between each floor support 74 and a respective bottom support 68 (and to this end each floor support 74 is preferably aligned with a respective bottom support 68). In the illustrated embodiment a support post 68 is located substantially at the mid-point of each floor support 74. Optionally a support 68 may be provided at either end.

In the preferred embodiment the frame 62 is configured to define a respective tank 42 between adjacent floor supports 74, the tanks 42 being further defined by the sides 64 and end 66 of the frame 62 as applicable. To this end a solid covering is provided on each side of the floor supports 74 to provide a respective wall for the respective tank(s) 42. Conveniently, the flooring used to create the floor 72 may also be used to provide the side coverings for the floor support 74. A similar covering may also be provided on the upper surfaces 76 of the floor support 72. The covering may be fixed in place by any suitable fixing e.g. screws, bolts and/or clips. By way of example and as best can be seen from Figure 9, one or more tags may be provide on the floor support 74 beneath which a suitable covering material can be inserted and retained thereby.

During use, the tanks 42 are intended to collect slurry or other waste from the pens above. To this end the inner surfaces of the tanks 42 are advantageously substantially liquid tight and, more preferably, are resistant to corrosion by slurry and the like. It is preferred therefore that the internal surfaces of the tanks 42 are covered with a suitable lining material, for example, a suitable plastics or fibreglass. Stainless steel may also be used. In the preferred embodiment a layer of protective lining (typically plastics or fibreglass) is applied to the interior surfaces of the tanks 42 typically in a liquid or non-set form, and then caused to set.

Each tank 42 is preferably provided with a drainage aperture 80 to allow the tanks 42 to be drained of their contents in any convenient manner.

In use, the floor 38 of the building segments 12a, 12b is supported by the floor support 74. In preferred embodiments, floor 38 comprises a plurality of slabs, for example, concrete slabs 82. The slabs 82 may be laid across, conveniently substantially perpendicularly with, the floor supports 74 and by the ends 66 and/or sides 64 of the frame as applicable. In the preferred embodiment, the floor 38 of each pen 34 comprises a plurality of slabs 82 extending substantially parallely with the side 64 and being supported by adjacent floor support 74 or by a floor support 74 and an end 66. The slabs 82 are typically arranged side by side and are substantially parallel with one another. Typically, the length of the slabs 82 substantially matches the width of the tanks 42, i.e. a respective set of slabs provide the floor 38 above each tank 42. Alternatively, the slabs may be dimensioned to extend across more than one tank.

The construction of the base structure 18 and in particular the strength provided by the frame 62 including in particular the support 74 allows the base structure to support relatively heavy slabs 82, in particular concrete slabs. As such, the building structure 10 is suitable for use as a variety of different animal housings. A particularly preferred use is as a finishing housing for pigs.

It will be apparent from the foregoing that embodiments of the invention may provide a number of advantages. The preferred two segment configuration facilitates a relatively large building structure to be constructed, which may be made to resemble a permanent structure, but which is still transportable and otherwise portable and which lends itself to being at least partly constructed off-site. Moreover, the preferred configuration of the base structure increases the versatility of the resulting building structure, particularly in that it is sufficiently robust to allow the use of concrete slabs as flooring.

The invention is not limited to the embodiments described herein which may be modified or varied without departing from the scope of the invention.

## Claims

1. A portable building structure comprising first and second building segments, each segment comprising a base structure, a wall structure and a roof structure, wherein the first and second building segments comprise individually portable units.

2. A portable building structure as claimed in claim 1, wherein the first and second segments are mutually spaced apart and substantially parallely disposed with respect to one another.

3. A portable building structure as claimed in claim 1 or 2, wherein said first and second segments are joined together by a mid-segment, the mid-segment being configured to provide a passageway between the first and second building segments.

4. A portable building structure as claimed in any one of claims 1 to 3, wherein each building segment has an internal side, the respective roof structure overhanging the respective internal side, overhanging portions of each roof structure preferably providing a roof for the mid-segment.

5. A portable building structure as claimed in any preceding claim, wherein each building segment is configured to define at least one animal pen, preferably a plurality of animal pens arranged in a row.

6. A portable building structure as claimed in claim 5 when dependent on claim 3, wherein the or each pen is openable, for example by means of a gate, onto the passageway defined by the mid-segment.

7. A portable building structure as claimed in claim 5 or 6, wherein base structure is shaped to define at least one tank below a floor of the or each pen.

8. A portable building structure as claimed in any preceding claim, wherein said base structure comprises a bottom, a peripheral wall and means for supporting a floor above the bottom.

9. A portable building structure as claimed in claim 8, wherein said base structure comprises at least one floor support extending between opposing portions of said peripheral wall to define at least two tanks.

10. A portable building structure as claimed in any one of claims 5 to 9, wherein a respective tank is provided for each pen.

11. A portable building structure as claimed in any preceding claim, wherein the base structure comprises a peripheral frame; at least one bottom support extending between opposing portions of said peripheral frame; and flooring supported by said bottom supports to provide the bottom of the base structure.

12. A portable building structure as claimed in claim 11, wherein a covering is provided over at least the sides of said at least one floor support, and optionally over the internal faces of said peripheral frame.

13. A portable building structure as claimed in claim 11 or 12, wherein said flooring and/or covering are provided with a substantially liquid-tight lining, for example of plastics or fibreglass, the lining providing the internal surfaces of the or each tank defined by the base structure.

14. A portable building structure as claimed in any one of claims 8 to 13, wherein the floor supported by the floor support(s) advantageously comprises concrete slabs.

15. A method of building a portable building structure, the method comprising at least partly constructing first and second building segments off site; individually transporting said building segments on site; locating said building segments side-by-side but spaced apart; and constructing a mid-segment to join said building segments to make a portable building structure.
